# EUROPÄISCHE PATENTSCHRIFT

(11) **EP 2 428 698 B1**
(45) Veröffentlichungstag und Bekanntmachung des Hinweises auf die Patenterteilung: **30.08.2017**
(21) Anmeldenummer: 11005753.6
(22) Anmeldetag: 14.07.2011
(51) Int. Cl.: F16F 13/10

(54) **Trennwand für ein Hydrolager**
Partition wall for a hydraulic support
Paroi de séparation pour une couche hydraulique

(30) Priorität: 14.09.2010 DE 102010045277
(43) Veröffentlichungstag der Anmeldung: 14.03.2012
(73) Patentinhaber: Vibracoustic GmbH, 64293 Darmstadt (DE)
(72) Erfinder: Beckmann, Wolfgang, 64289 Darmstadt (DE); Lobmueller, Guenter, 69509 Mörlenbach (DE); Holz, Roland, 64658 Fürth (DE); Farrenkopf, Peter, 68519 Viernheim (DE)
(74) Vertreter: Flügel Preissner Schober Seidel

(56) Entgegenhaltungen:
- EP-A1- 0 098 330
- EP-A1- 0 262 296
- EP-A1- 1 923 598
- DE-A1- 10 213 996
- US-A- 2 941 544

## Beschreibung

### Technisches Gebiet

Die Erfindung befasst sich mit einer Trennwand für ein Hydrolager mit einer Tragfeder aus einem Elastomer zwischen einem Traglager und einem Auflager, einer Arbeitskammer und eine Ausgleichskammer, welche durch die Trennwand aus zwei starren Düsenscheiben mit dazwischen eingefügter biegeweicher elastischer Membran voneinander getrennt sind, wobei die Kammern hydraulisch über einen Dämpfungskanal miteinander verbunden sind.

### Stand der Technik

Hydrolager der genannten Art werden als hydraulisch dämpfende Lager bei Getrieben und Motoren eingesetzt. Der vom Lager abgestützte Motor bzw. das Getriebe werden bei entstehenden Schwingungen von der Tragfeder abgefedert. Die hydraulische Flüssigkeit in den Kammern und im Dämpfungskanal dient zur Dämpfung von Schwingungen mit großer Amplitude und geringer Frequenz. Die Anordnung der Membran zwischen den Düsenscheiben in der Trennwand übernimmt die Isolierung des Dämpfungskanals bei hochfrequenten Schwingungen mit kleiner Amplitude. Die von den Schwingungen des Motors herrührenden Amplituden liegen unterhalb von ±0,2 mm. Bei Amplituden darüber liegt die Membrane an einer der Düsenscheiben an. Hiernach wird die Dämpfung vom Dämpfungskanal übernommen. Im Bereich der vom Motor herrührenden kleinen Amplituden von unterhalb ±0,2 mm besteht die Schwierigkeit einer exakten Einstellung für die Entkoppelung. Wird die freie Bewegung der Membran bei 0,05 mm eingestellt, so werden bei darüber liegenden Amplituden bis 0,2 mm unbefriedigende Dämpfungswerte erreicht, da der Dämpfungskanal noch nicht seine volle Wirksamkeit entfalten kann. Um hier bessere Ergebnisse zu erreichen, werden größere Fertigungstoleranzen mit einer Amplitude für die Membran von ±0,2 mm zugelassen. Dieses hat jedoch zur Folge, dass bei Amplituden ab diesem Bereich die Dämpfung zusammenbricht.

In EP 1 923 598 A1 ist eine Trennwand für ein Hydrolager offenbart, die zwei Düsenscheiben und eine zwischen den Düsenscheiben geklemmte Membran aufweist. Eine Bewegung der Membran ist nur im Bereich der Öffnungen der Düsenscheiben möglich.

Aus DE 102 13 996 A1 geht eine Trennwand für ein Hydrolager hervor, die aus zwei Düsenscheiben gebildet ist. Zwischen den Düsenscheiben ist eine Membran angeordnet, die an ihren Rändern zwischen den Düsenscheiben geklemmt ist. Außerhalb dieser Klemmbereiche ist die Membran beweglich zwischen den Düsenscheiben angeordnet.

Aus EP 0 098 330 A1 ist eine Trennwand für ein Hydrolager bekannt, die zwei Düsenscheiben aufweist. Zwischen den Düsenscheiben ist eine Membran angeordnet, die zwischen den Düsenscheiben und sämtlichen Gitterstäben der Düsenscheiben eingeklemmt ist. Eine Bewegung der Membran ist somit nur im Bereich der Öffnungen der Düsenscheiben möglich.

Ferner geht aus EP 0 262 296 A1 eine Trennwand für ein Hydrolager hervor, die zwei Düsenscheiben mit einer zentralen Öffnung aufweist. Innerhalb der Öffnung ist eine Membran angeordnet, die an ihrem äußeren Rand zwischen den Düsenscheiben eingeklemmt ist.

### Darstellung der Erfindung

Der Erfindung liegt die Aufgabe zugrunde, den vorliegenden Zielkonflikt zu entschärfen und eine Trennwand für ein entkoppeltes Hydrolager zu schaffen, mit der eine optimale Isolierung von Schwingungen mit kleiner Amplitude kostengünstig erreicht werden kann.

Die Lösung der gestellten Aufgabe erfolgt mit den Merkmalen des Anspruchs 1. Die Unteransprüche 2 bis 19 geben vorteilhafte Weiterbildungen des Erfindungsgedankens wieder.

Versuche haben bestätigt, dass der vorliegende Zielkonflikt dadurch entschärft werden kann, dass die Membran in vorgegebenen Bereichen geklemmt und in den dazwischen liegenden verbliebenen Teilbereichen
mit Spiel angeordnet ist. Die nichtgeklemmten Teilbereiche der Membran können sich zwischen den Düsenscheiben über eine geringe Wegstrecke bewegen und auch in die Düsenöffnungen der Düsenscheiben hinein auswölben.

Die mit Spiel angeordneten Teilbereiche sind auf das bei vorgegebenen kleinen Anregungsamplituden verdrängte Flüssigkeitsvolumen abgestimmt, und zwar so, dass das verdrängte Flüssigkeitsvolumen von diesen Teilbereichen aufgenommen werden kann. Die Anregungsamplituden der Membran liegen dabei unter ±0,2 mm. Es ist möglich, hier die Membran auf Amplituden unter±0,1 mm einzustellen, um sowohl eine gute Isolierung als auch eine gute Dämpfung zu erreichen.

Die Bewegungsfreiheit für die Teilbereiche der Membran werden durch ringförmige Vertiefungen in der Innenfläche von mindestens einer der Düsenscheiben erreicht. Dabei ist es günstig, wenn die Vertiefungen radikal 20 % bis 5 % des Durchmessers der Membran bzw. des Aufnahmeraums für die Membran betragen. Eine sehr günstige Ausgestaltung ergibt sich dann, wenn die Vertiefungen radial 10 % des Durchmessers des Aufnahmeraums für die Membran ausmachen. Die Dicke der Membran wird so gewählt, dass sie axial etwa 20 % bis 5 % der Membrane ausmacht. Bei einer Anordnung der Vertiefungen auf beiden Düsenscheiben werden die Vertiefungen paarweise axial gegenüberliegend angebracht.

Die Verklemmung der Membran erfolgt an ihrem Außenrand und/oder in ihrer Mitte, gegebenenfalls an einem dort vorhandenen Innenrand. Bevorzugt wird die Membran jedoch auch von der Gitterstruktur der Düsenscheiben geklemmt.

Um Klappergeräusche zu vermeiden, kann die Membran an ihrer Oberfläche profiliert sein. Diese Profile betragen im Mittel 20 % der Membrandicke.

Eine besonders günstige und für den mit der Erfindung verfolgten Zweck ausgebildete Membran wird dadurch erreicht, dass die Membran wellenförmig ausgestaltet ist. Dabei ist es auch möglich, dass die Wellenkuppen der Membran in ihrer Ruhestellung in den nichtgeklemmten Bereichen an den Düsenscheiben anliegen.

In weiterer Ausgestaltung kann die Membran mit Ventilen in Form von Schlitzen versehen sein. Diese Schlitze sind im Bereich der Düsenöffnungen in den Düsenscheiben angeordnet. Dabei sind jedem Schlitz zwei axial ausgerichtete gleich große Düsenöffnungen zugeordnet. Um einen Flüssigkeitsstrom in beiden Richtungen durch die Düsenscheiben zu ermöglichen, werden die Schlitze mit einer Einlassseite und einer Verschlussseite versehen. Dies hat zur Folge, dass die Schlitze in der Art eines Rückschlagventils den Durchlass für die Flüssigkeit nur in einer Richtung freigeben. Demzufolge wird jede Seite der Membran bevorzugt mit der gleichen Anzahl von Schlitzen ausgeführt. Die Schlitze sind auf ihrer Einlassseite mit umlaufenden Wülsten eingefasst. Diese Wülste umranden in die Membran eingebrachte Kerben, welche spitz auf den jeweiligen Schlitz zulaufen. Die Schlitze selbst sind radial ausgerichtet. Durch die eingebrachten Schlitze wird eine Kavitation verhindert, wenn beispielsweise der Dampfdruck der Flüssigkeit bei Unterdruck unterschritten wird.

### Kurzbeschreibung der Zeichnung

Anhand eines in der Zeichnung dargestellten Ausführungsbeispiels wird die Erfindung nachstehend näher erläutert.

Es zeigen:
- Fig. 1: ein Hydrolager im Längsschnitt mit der erfindungsgemäßen Trennwand;
- Fig. 2: eine Draufsicht auf die Trennwand;
- Fig. 3: einen Schnitt durch die Trennwand gemäß der Linie B-B der Fig. 2;
- Fig. 4: einen Schnitt durch die Trennwand gemäß der Linie A-A der Fig. 2;
- Fig. 5: eine Draufsicht auf die Membran;
- Fig. 6: einen Teilschnitt durch die Membran; gemäß der Linie C;
- Fig. 7: einen Teilschnitt durch die Membran gemäß Linie D-D der Fig. 5;
- Fig. 8: eine Draufsicht auf die Einlassseite eines Schlitzes in der Membran;
- Fig. 9: einen Schnitt gemäß der Linie E-E durch einen Abschnitt der Membran nach der Fig. 8.

### Ausführung der Erfindung

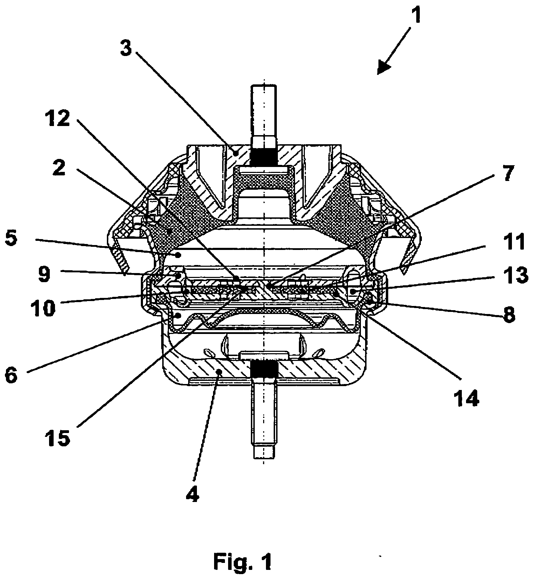

Das in der Fig. 1 dargestellte Hydrolager 1 besteht aus der Tragfeder 2, die rotationssymmetrisch angeordnet ist, dem Traglager 3 und dem Auflager 4. Unterhalb der Tragfeder 2 und des Traglagers 3 befindet sich die Arbeitskammer 5. Diese Arbeitskammer 5 ist von der Ausgleichskammer 6 durch die Trennwand 7 getrennt. Die Ausgleichskammer 6 ist durch den Rollbalg 8 abgeschlossen. Die Trennwand 7 wird durch die aneinander anliegenden Düsenscheiben 9 und 10 mit der dazwischen liegenden Membran 11 gebildet. Die Düsenscheiben 9, 10 sind mit den Düsen 12 versehen, über die der Zutritt der Flüssigkeit aus den Kammern 5 und 6 zur Membran 11 erfolgt. Außerdem ist in der Trennwand 7 der Dämpfungskanal 13 untergebracht, welcher hydraulisch die Kammern 5 und 6 verbindet. Die Membran 11 ist in den Randbereichen 14 und 15 von den Düsenscheiben 9, 10 eingeklemmt. Die Membran 7 ist wellenförmig ausgebildet und hat Entlastungsschlitze 25, 26, die bei übergroßen Druckdifferenzen zwischen den Kammern 5 und 6 wirksam werden.

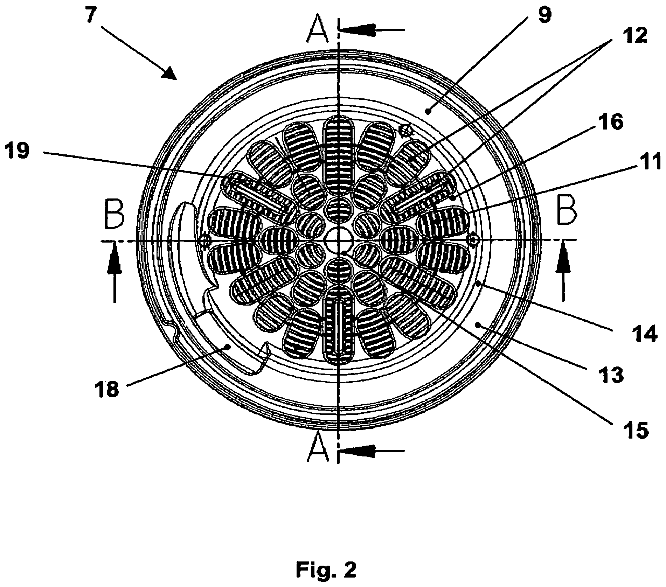

Die Fig. 2 zeigt eine Draufsicht auf die Trennwand 7 mit der Anordnung der Düsen 12. Die Düsen 12 sind symmetrisch zueinander angeordnet. Im Außenrand der Trennwand 7 befindet sich der Dämpfungskanal 13, dessen Öffnung 18 zur Kammer 5 sichtbar ist. Durch die Düsenöffnungen ist der konzentrische Verlauf der Wellen in der Membran 11 sichtbar. Die Membran 11 ist an ihrem Außenrand 14 und an ihrem Innenrand 15 von den Düsenscheiben 9 und 10 geklemmt. Dabei findet die Klemmung auch zwischen der Gitterstruktur 16 statt. Hiervon ausgenommen ist der Teilbereich 19 der Gitterstruktur der Düsenscheiben 9 und 10 , welcher von der ringförmigen Vertiefung erfasst ist. Hier findet keine Verklemmung der Membran 11 statt, so dass die Membran 11 sich in diesem Teilbereich 19 mit Spiel bewegen kann. Die auf den Innenflächen der Düsenscheiben 9, 10 vorgesehenen Ringnuten 29, erlauben der Membran 11 einen Freiraum für eine axiale Bewegung.

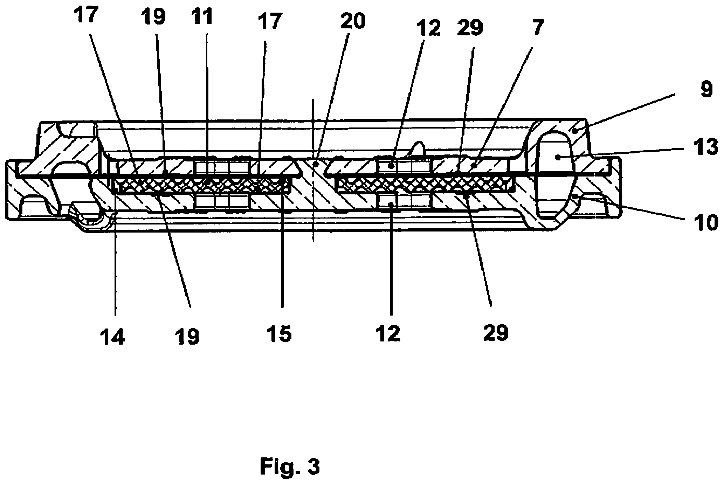

Die Fig. 3 zeigt einen Schnitt durch die Trennwand 7 gemäß der Linie B-B der Fig. 2. Die beiden Düsenscheiben 9, 10 sind über den Nietkopf 20 fest miteinander verbunden. Die Membrane 11 ist am Außenrand 14 und am Innenrand 15 von den Düsenscheiben 9, 10 geklemmt. Dabei wird auch der Bereich 16 der Membrane miteinbezogen, der von der Gitterstruktur der Düsenscheiben 9,10 gebildet wird. Eine Bewegung bleibt für die Membrane 11 in dem Teilbereich 19, in dem die Düsenöffnungen 12 der Düsenscheiben 9, 10 angebracht sind. Ein zusätzlicher Freiraum für ein Spiel für die Membrane 11 wird durch die Ringnuten 29 erreicht, die in den Innenflächen der Düsenscheiben 9,10 angebracht sind.

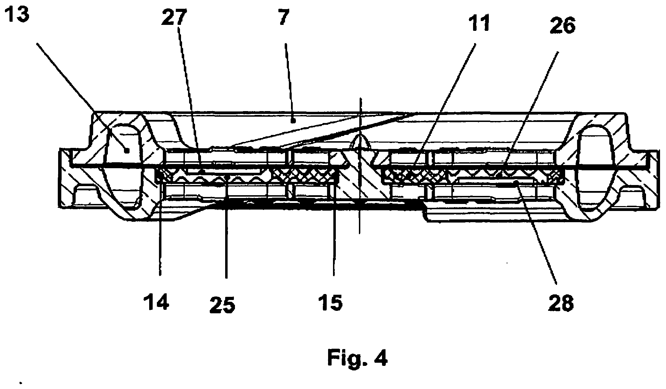

Die Fig. 4 zeigt einen Schnitt gemäß der Linie A-A der Fig. 2. Hier sind die Schlitze 25, 26 sichtbar, die in die wellenförmige Membran 11 eingebracht sind. Im Übrigen entspricht die Ausbildung der Trennwand 7 der unter Fig. 3 bereits geschilderten Ausführungsform, insofern wird auf Wiederholungen verzichtet. Bei den Schlitzen 25, 26 ist sichtbar, dass ihre Einlässe 27 und 28 jeweils entgegengesetzt ausgerichtet sind. Der Einlass 27 für den Schlitz 25 weist zur Arbeitskammer 5, während der Einlass 28 für den Schlitz 26 zur Ausgleichskammer 6 gerichtet ist. Im Bereich der die Schlitze 25, 26 umgebenden Düsen 12 ist die Membran 11 frei beweglich.

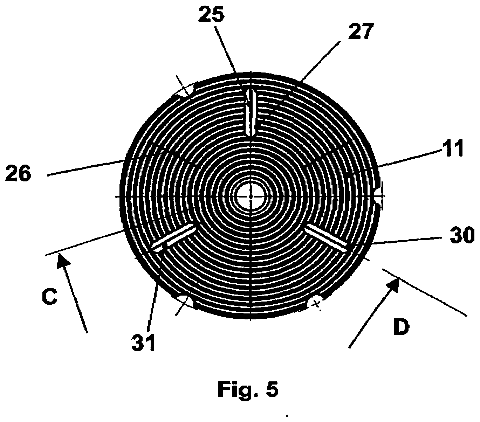

In der Fig. 5 ist die Membran 11 in der Draufsicht gezeigt. Die Anordnung der Schlitze 25 und 26 wird hier nochmals verdeutlicht. Auf ihren Einlassseiten 27, 28 sind die Schlitze 25, 26 von den umlaufenden Wülsten 30 eingefasst. Von den Wülsten 30 gehen in die Membran 11 eingebrachte. Kerben 31 aus, welche spitz auf den jeweiligen Schlitz 25, 26 zulaufen. Die Schlitze 25, 26 sind mit ihren Einlass- bzw. Auslassseiten auf beiden Seiten der Membran 11 in gleicher Anzahl vorhanden. So sind auf der gezeigten Membran 11 sechs Schlitze vorhanden, von denen drei mit ihren Einlassseiten 27 zur Arbeitskammer 5 gerichtet sind, während die Einlassseiten 28 der Schlitze 26 auf der Seite der Ausgleichskammer 6 liegen. Die Schlitze 25, 26 sind in beiden Fällen radial ausgerichtet. Sie liegen außerdem bei den Düsenöffnungen mit der längsten radialen Ausdehnung.

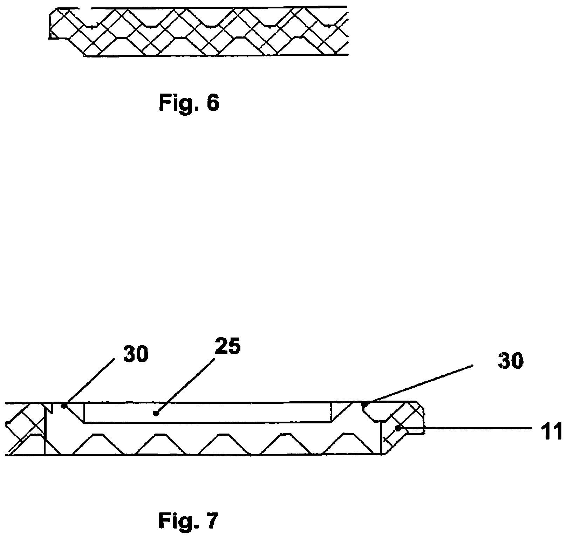

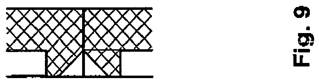

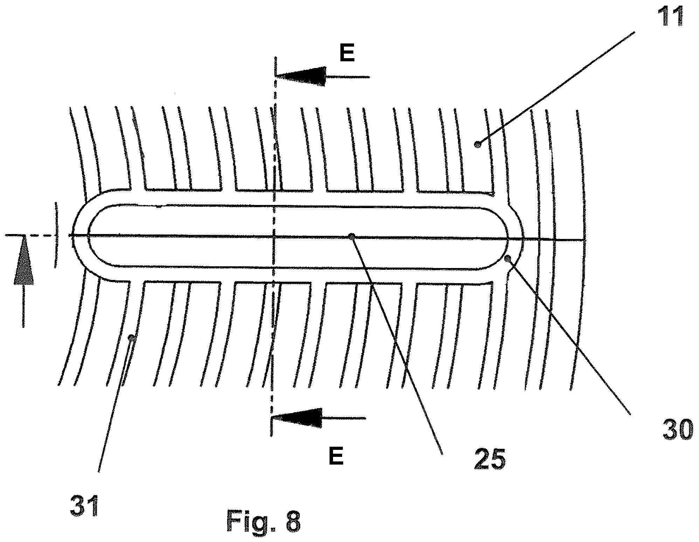

In den Fig. 6 bis 9 sind Details der Membran wiedergegeben. So ist in der Fig. 6 in einem Teilschnitt die Ausbildung der Wellen der Membran sichtbar gemacht. Die Fig. 7 zeigt ebenfalls in einem Teilschnitt den Bereich der Membran 11, welcher mit einem Schlitz 25versehen ist. Die Fig. 8 zeigt in der Draufsicht die Einfassung des Schlitzes 25 durch die Wulst 30. Dabei ist die Wulst 30 von der gleichen Höhe wie die Wellenkuppen der Wellen der Membran 11.

Durch die vorliegende Erfindung wird bei Amplituden unterhalb von ±0,2 mm die Möglichkeit eröffnet, eine weitgehend gleichbleibende dynamische Steifigkeit bei der Isolierung von Schwingungen mit kleinen Amplituden im Frequenzbereich von bis zu 50 Hz zu erreichen.

## Patentansprüche

1. Trennwand (7) für ein Hydrolager (1) mit einer Tragfeder (2) aus einem Elastomer zwischen einem Traglager (3) und einem Auflager (4) einer Arbeitskammer (5) und einer Ausgleichskammer (6), welche durch die Trennwand (7) aus zwei starren Düsenscheiben (9, 10) mit dazwischen eingefügter biegeweicher elastischer Membran (11) voneinander getrennt sind, wobei die Kammern (5, 6) hydraulisch über einen Dämpfungskanal (13) miteinander verbunden sind, wobei die Membran (11) in vorgegebenen Bereichen (14, 15, 16) geklemmt und in den dazwischen liegenden verbliebenen Teilbereichen (19) mit Spiel angeordnet ist **dadurch gekennzeichnet, dass** dass die Teilbereiche (19) mit Spiel aus in der Innenfläche mindestens einer der Düsenscheiben (9, 10) angebrachten ringförmigen Vertiefung (29) gebildet sind.

2. Trennwand für ein Hydrolager nach Anspruch 1, **dadurch gekennzeichnet, dass** die mit Spiel angeordneten Teilbereiche (19) auf das bei vorgebenen kleinen Anregungsamplituden verdrängte Flüssigkeitsvolumen abgestimmt sind und das verdrängte Flüssigkeitsvolumen aufnehmen, wobei die Anregungsamplituden der Membran (11) unter ±0,2 mm liegen.

3. Trennwand für ein Hydrolager nach Anspruch 1 oder 2, **dadurch gekennzeichnet, dass** die Vertiefungen (29) radial 20 % bis 5 % des Durchmessers der Membran (11) betragen.

4. Trennwand für ein Hydrolager nach einem der Ansprüche 1 bis 3, **dadurch gekennzeichnet, dass** die Vertiefungen (29) radial 10 % des Durchmessers der Membran (11) betragen.

5. Trennwand für ein Hydrolager nach einem der Ansprüche 1 bis 4, **dadurch gekennzeichnet, dass** die Vertiefungen (29) axial 20 % bis 5 % der Membrandicke betragen.

6. Trennwand für ein Hydrolager nach einem der Ansprüche 1 bis 5, **dadurch gekennzeichnet, dass** die Vertiefungen (29) paarweise axial gegenüberliegend an den Innenflächen der Düsenscheiben (9, 10) angebracht sind.

7. Trennwand für ein Hydrolager nach Anspruch 1, **dadurch gekennzeichnet, dass** die Membran (11) an ihrem Außenrand (14) und/oder an ihrer Mitte bzw. Innenrand (15) von den Düsenscheiben (9, 10) geklemmt ist.

8. Trennwand für ein Hydrolager nach Anspruch 1 oder 7, **dadurch gekennzeichnet, dass** die Membran (11) von einer Gitterstruktur (16) der Düsenscheiben (9, 10) geklemmt ist.

9. Trennwand für ein Hydrolager nach Anspruch 1, **dadurch gekennzeichnet, dass** die Membran (11) an ihrer Oberfläche profiliert ist.

10. Trennwand für ein Hydrolager nach Anspruch 9, **dadurch gekennzeichnet, dass** die Höhe der Profile 20 % der Membrandicke betragen.

11. Trennwand für ein Hydrolager nach Anspruch 1, **dadurch gekennzeichnet, dass** die Membran (11) wellenförmig ausgebildet ist.

12. Trennwand für ein Hydrolager nach Anspruch 11, **dadurch gekennzeichnet, dass** in Ruhestellung der Membran (11) die Wellenkuppen in den nichtgeklemmten Teilbereichen (19) an den Düsenscheiben (9, 10) anliegen.

13. Trennwand für ein Hydrolager nach einem der Ansprüche 1 bis 12, **dadurch gekennzeichnet, dass** die Membran (11) mit Ventilen in Form von Schlitzen (25, 26) versehen ist.

14. Trennwand für ein Hydrolager nach Anspruch 13, **dadurch gekennzeichnet, dass** die Schlitze (25, 26) im Bereich der Düsenöffnungen in den Düsenscheiben (9, 10) angeordnet sind.

15. Trennwand für ein Hydrolager nach Anspruch 14, **dadurch gekennzeichnet, dass** jedem Schlitz (25, 26) zwei axial ausgerichtete gleichgroße Düsenöffnungen zugeordnet sind.

16. Trennwand für ein Hydrolager nach einem der Ansprüche 13 bis 15, **dadurch gekennzeichnet, dass** die Schlitze (25, 26) auf ihrer Einlassseite (27, 28) von umlaufenden Wülsten (30) eingefasst sind.

17. Trennwand für ein Hydrolager nach Anspruch 16, **dadurch gekennzeichnet, dass** die Wülste (30) in die Membran (11) eingebrachte spitz auf den jeweiligen Schlitz (25, 26) zulaufende Kerben (31) umranden.

18. Trennwand für ein Hydrolager nach einem der Ansprüche 16 oder 17, **dadurch gekennzeichnet, dass** die Anzahl der Einlassseiten (27, 28) der Schlitze (25, 26) auf beiden Seiten der Membran (11) gleich ist.

19. Trennwand für ein Hydrolager nach einem der Ansprüche 13 bis 18, **dadurch gekennzeichnet, dass** die Schlitze (25, 26) radial ausgerichtet sind.

## Claims

1. A partition wall (7) for a hydro mount (1) with a supporting spring (2) made of an elastomer between a carrying mount (3) and a support (4), a working chamber (5) and a compensation chamber (6) which are partitioned from one another by the partition wall (7) consisting of two rigid nozzle disks (9, 10) with a pliable, flexible membrane (11) inserted therebetween, wherein the chambers (5, 6) are hydraulically connected to one another via a damping channel (13), wherein the membrane (11) is jammed in predetermined regions (14, 15, 16) and positioned with play in the remaining part-regions (19) therebetween, **characterized in that** the part-regions (19) with play are formed from an annular recess (29) placed in the inner face of at least one of the nozzle disks (9, 10).

2. The partition wall for a hydro mount according to claim 1, **characterized in that** the part-regions (19) arranged with play are adapted to the fluid volume displaced at predetermined small excitation amplitudes and receive the displaced fluid volume, wherein the excitation amplitudes of the membrane (11) are less than ±0,2 mm.

3. The partition wall for a hydro mount according to claim 1 or 2, **characterized in that** the recesses (29) are radially 20 % to 5 % of the diameter of the membrane (11).

4. The partition wall for a hydro mount according to any of claims 1 to 3, **characterized in that** the recesses (29) are radially 10 % of the diameter of the membrane (11).

5. The partition wall for a hydro mount according to any of claims 1 to 4, **characterized in that** the recesses (29) are axially 20 % to 5 % of the membrane thickness.

6. The partition wall for a hydro mount according to any of claims 1 to 5, **characterized in that** the recesses (29) are placed pairwise axially opposite at the inner faces of the disk nozzles (9, 10).

7. The partition wall for a hydro mount according to claim 1, **characterized in that** the membrane (11) is jammed at its outer edge (14) and/or at its center, respectively inner edge (15), by the nozzle disks (9, 10).

8. The partition wall for a hydro mount according to claim 1 or 7, **characterized in that** the membrane (11) is jammed by a grid structure (16) of the nozzle disks (9, 10).

9. The partition wall for a hydro mount according to claim 1, **characterized in that** the membrane (11) is profiled at its surface.

10. The partition wall for a hydro mount according to claim 9, **characterized in that** the height of the profiles is 20 % of the membrane's thickness.

11. The partition wall for a hydro mount according to claim 1, **characterized in that** the membrane (11) is formed having a wave-like shape.

12. The partition wall for a hydro mount according to claim 11, **characterized in that** in the rest position of the membrane (11) the wave summits abut against the nozzle disks (9, 10) in the unjammed part-regions (19).

13. The partition wall for a hydro mount according to any of claims 1 to 12, **characterized in that** the membrane (11) is provided with valves formed by slots (25, 26).

14. The partition wall for a hydro mount according to claim 13, **characterized in that** the slots (25, 26) are disposed in the region of the nozzle orifices in the nozzle disks (9, 10).

15. The partition wall for a hydro mount according to claim 14, **characterized in that** two axially aligned nozzle orifices having the same size are assigned to each slot (25, 26).

16. The partition wall for a hydro mount according to any of claims 13 to 15, **characterized in that** the slots (25, 26) are enclosed by revolving beads (30) on their inlet side (27, 28).

17. The partition wall for a hydro mount according to claim 16, **characterized in that** the beads (30) edge notches (31) cut in the membrane (11) and tapering to the respective slot (25, 26).

18. The partition wall for a hydro mount according to any of claims 16 or 17, **characterized in that** the number of inlet sides (27, 28) of the slots (25, 26) is equal on both sides of the membrane (11).

19. The partition wall for a hydro mount according to any of claims 13 to 18, **characterized in that** the slots (25, 26) are aligned radially.

## Revendications

1. Paroi de séparation (7) pour un support hydraulique (1) avec un ressort porteur (2) en élastomère entre un bloc support (3) et un bloc supporté (4), d'une chambre de travail (5) et d'une chambre d'égalisation (6), lesquelles sont séparées l'une de l'autre par la paroi de séparation (7) formée de deux plaques à buses rigides (9, 10) avec une membrane élastique souple en flexion (11) insérée entre les deux plaques, dans laquelle les chambres (5, 6) sont reliées l'une à l'autre sur le plan hydraulique via un canal d'amortissement (13), dans laquelle la membrane (11) est coincée dans des zones prédéterminées (14, 15, 16) et est agencée avec jeu dans les zones partielles restantes (19) situées entre celles-ci,
**caractérisée en ce que** les zones partielles (19) sont formées avec jeu dans la surface intérieure d'au moins un renfoncement de forme annulaire (29) ménagé dans l'une des plaques à buses (9, 10).

2. Paroi de séparation pour un support hydraulique selon la revendication 1, **caractérisée en ce que** les zones partielles (19) agencées avec jeu sont accordées au volume de liquide refoulé sous de faibles amplitudes d'excitation prédéterminées et reçoivent le volume de liquide refoulé, les amplitudes excitation de la membrane (11) étant situées au-dessous de ± 0,2 mm.

3. Paroi de séparation pour un support hydraulique selon la revendication 1 ou 2, **caractérisée en ce que** les renfoncements (29) s'élèvent radialement de 20 % à 5 % du diamètre de la membrane (11).

4. Paroi de séparation pour un support hydraulique selon l'une des revendications 1 à 3, **caractérisée en ce que** les renfoncements (29) s'élèvent radialement à 10 % du diamètre de la membrane (11).

5. Paroi de séparation pour un support hydraulique selon l'une des revendications 1 à 4, **caractérisée en ce que** les renfoncements (29) s'élèvent axialement de 20 % à 5 % de l'épaisseur de la membrane.

6. Paroi de séparation pour un support hydraulique selon l'une des revendications 1 à 5, **caractérisée en ce que** les renfoncements (29) sont ménagés par paires axialement de façon opposée sur les surfaces intérieures des plaques à buses (9, 10).

7. Paroi de séparation pour un support hydraulique selon la revendication 1, **caractérisée en ce que** la membrane (11) est coincée par les plaques à buses (9, 10) à sa bordure extérieure (14) et/ou au niveau de son milieu ou de sa bordure intérieure (15).

8. Paroi de séparation pour un support hydraulique selon la revendication 1 ou 7, **caractérisée en ce que** la membrane (11) est coincée par une structure grillagée (16) des plaques à buses (9, 10).

9. Paroi de séparation pour un support hydraulique selon la revendication 1, **caractérisée en ce que** la membrane (11) est profilée à sa surface.

10. Paroi de séparation pour un support hydraulique selon la revendication 9, **caractérisée en ce que** la hauteur des profils s'élève à 20 % de l'épaisseur de la membrane.

11. Paroi de séparation pour un support hydraulique selon la revendication 1, **caractérisée en ce que** la membrane (11) est réalisée sous forme ondulée.

12. Paroi de séparation pour un support hydraulique selon la revendication 11, **caractérisée en ce que**, dans la position de repos de la membrane (11), les sommets des ondulations s'appliquent contre les plaques à buses (9, 10) dans les zones partielles (19) non coincées.

13. Paroi de séparation pour un support hydraulique selon l'une des revendications 1 à 12, **caractérisée en ce que** la membrane (11) est dotée de valves sous la forme de fentes (25, 26).

14. Paroi de séparation pour un support hydraulique selon la revendication 13, **caractérisée en ce que** les fentes (25, 26) sont agencées dans la région des ouvertures des buses dans les plaques à buses (9, 10).

15. Paroi de séparation pour un support hydraulique selon la revendication 14, **caractérisée en ce que** deux ouvertures de buse de même taille et orientées axialement sont associées à chaque fente (25, 26).

16. Paroi de séparation pour un support hydraulique selon l'une des revendications 13 à 15, **caractérisée en ce que** les fentes (25, 26) sont enserrées par des bourrelets périphériques (30) sur leur côté d'entrée (27, 28).

17. Paroi de séparation pour un support hydraulique selon la revendication 16, **caractérisée en ce que** les bourrelets (30) entourent des entailles (31) ménagées dans la membrane (11) et convergeant en pointe vers la fente respective (25, 26).

18. Paroi de séparation pour un support hydraulique selon l'une des revendications 16 ou 17, **caractérisée en ce que** le nombre des côtés d'entrée (27, 28) des fentes (25, 26) est égal sur les deux côtés de la membrane (11).

19. Paroi de séparation pour un support hydraulique selon l'une des revendications 13 à 18, **caractérisée en ce que** les fentes (25, 26) sont orientées radialement.
